# EUROPEAN PATENT APPLICATION

(11) **EP 2 846 312 A1**
(43) Date of publication of application: **11.03.2015**
(21) Application number: 14182556.2
(22) Date of filing: 27.08.2014
(51) Int. Cl.: G07C 9/00

(54) **Remote key for control of vehicles**

(30) Priority: 27.08.2013 TW 102130665
(71) Applicant: Hon Hai Precision Industry Co., Ltd., New Taipei City (TW)
(72) Inventor: Lee, Chia-Yen, New Taipei (TW)
(74) Representative: Towlson, Samantha Jayne

(57) **Abstract**

A remote key for control of a vehicle includes a touch panel, a storage device, a touch sensing unit, and a micro controller. Function icons arranged on the touch panel are operable to control a vehicle to perform a function. The storage device can store coordinates of the function icons and a mapping list defining a relationship between predetermined touches and predetermined functions. The touch sensing unit can sense user touches applied to the touch panel. If the micro controller determines that a sensed touch matches one of the predetermined touches, the micro controller can further search the mapping list to determine a function corresponding to the sensed touch, and generate a remote control signal for controlling the vehicle to execute the function.

## Description

### Field

The subject matter herein generally relates to controls for vehicle functions, and particularly to a remote key for control of a vehicle.

### BackGround

A remote key can be used for remotely locking or unlocking a vehicle.

### Summary

According to an embodiment of the invention, a remote key for control of a vehicle includes a touch panel, a storage device, a touch sensing unit, and a micro controller. Function icons arranged on the touch panel are operable to control a vehicle to perform a function. The storage device can store coordinates of the function icons and a mapping list defining a relationship between predetermined touches and predetermined functions. The touch sensing unit can sense user touches applied to the touch panel. If the micro controller determines that a sensed touch matches one of the predetermined touches, the micro controller can further search the mapping list to determine a function corresponding to the sensed touch, and generate a remote control signal for controlling the vehicle to execute the function.

### BRIEF DESCRIPTION OF THE DRAWINGS

Implementations of the present disclosure will now be described, by way of example only, with reference to the attached figures.
FIG. 1 shows a plan view of a remote key for control of a vehicle.
FIG. 2 is block diagram illustrating the remote key of FIG. 1.
FIG. 3 shows a plan view of the remote key of FIG. 1 in operation.
FIG. 4 shows a plan view of another remote key in operation.

### DETAILED DESCRIPTION

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details. In other instances, methods, procedures, and components have not been described in detail so as not to obscure the related relevant feature being described. The drawings are not necessarily to scale and the proportions of certain parts may be exaggerated to better illustrate details and features. The description is not to be considered as limiting the scope of the embodiments described herein.

Definitions that apply throughout this disclosure will now be presented.

The term "coupled" is defined as connected, whether directly or indirectly through intervening components, and is not necessarily limited to physical connections. The connection can be such that the objects are permanently connected or releasably connected. The term "comprising" means "including, but not necessarily limited to"; it specifically indicates open-ended inclusion or membership in a so-described combination, group, series and the like.

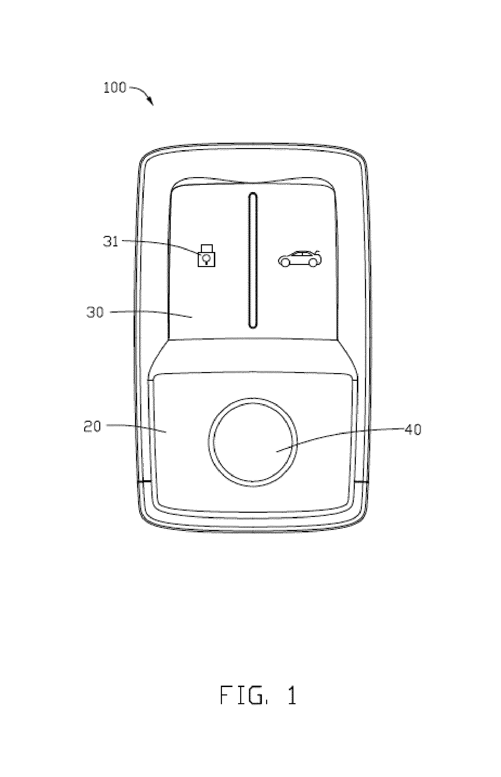

FIG. 1 shows a plan view of a remote key 100 for control of a vehicle (not shown). The remote key 100 includes, but is not limited to, a main body 20 and a touch panel 30 arranged on the main body 20. A plurality of function icons 31 are arranged on the touch panel 30, and each of the function icons 31 is operable to control the vehicle to perform a function, such as lock or unlock doors, open or close a trunk, open or close a convertible roof, or turn on and turn off the vehicle engine. In one embodiment, a user can touch these icons 31 in a predetermined way to control the vehicle to perform functions.

In one embodiment, the touch panel 30 is made of transparent materials, and the function icons 31 are provided in the interior of the touch panel 30, in order to prevent wear and tear caused by repeated touches. In another embodiment, the function icons 31 can be printed or laser etched on the touch panel 30.

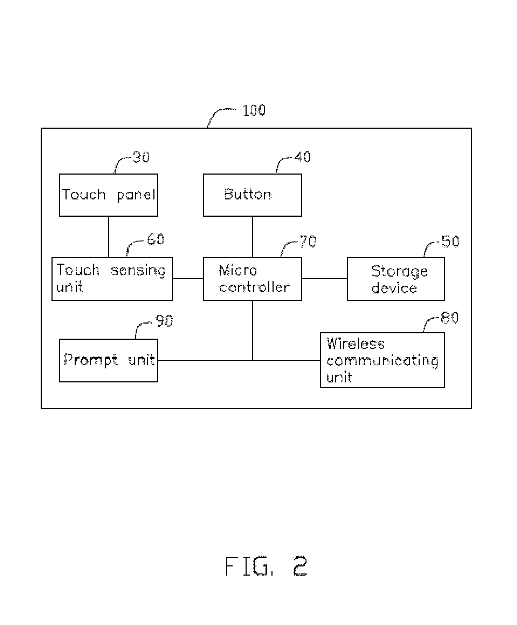

Referring to FIG. 2, the remote key 100 further includes a storage device 50, a touch sensing unit 60, a micro controller 70, and a wireless communicating unit 80, which are arranged in the interior of the main body 20.

In one embodiment, the storage device 50 can store coordinates of the function icons 31 and a mapping list which defines a relationship between predetermined touches and predetermined functions.

The touch sensing unit 60 is coupled to the touch panel 30, and can sense a touch 32 applied to the touch panel 30.

The micro controller 70 can search the mapping list to determine whether the sensed touch matches one of the predetermined touches. If the sensed touch matches one of the predetermined touches, the micro controller 70 can further search the mapping list to determine a required function corresponding to the sensed touch, and generate a remote control signal for controlling the vehicle to execute the required function.

The wireless communicating unit 80 can transmit the remote control signal to a receiver (not shown) of the vehicle, to control the vehicle to execute the required function.

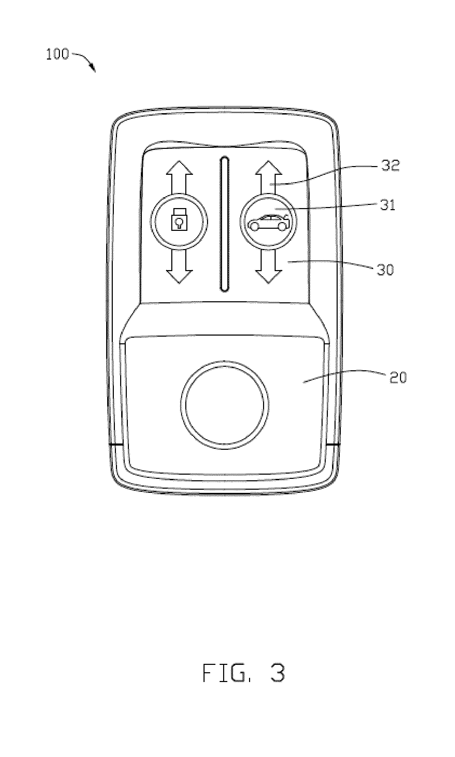

In one embodiment, referring to FIG. 3, in use, user can touch one of the function icons 31 and slide it along a predetermined direction such as upward or downward, or slide with a predetermined pattern such as in a straight or curved line, to trigger the micro controller 70 to generate the remote control signal.

In the embodiment, each predetermined touch stored in the storage device 50 includes a predetermined touch track starting from the coordinates of one of the function icons 31. In one embodiment, each predetermined touch track starts from the coordinates of one of the function icons 31, and extends in a predetermined direction. In another embodiment, each predetermined touch track starts from the coordinates of one of the function icons 31, and follows a predetermined pattern.

In the embodiment, the micro controller 70 can determine whether the sensed touch includes a track starting from a start point located on the coordinates of one of the function icons 31. If the sensed touch includes a track starting from a start point located on the coordinates of one of the function icons 31, the micro controller 70 can further determine whether the track of the sensed touch matches a predetermined touch track starting from the start point. If the track of the sensed touch matches a predetermined touch track starting from the start point, the micro controller 70 determines that the sensed touch matches one of the predetermined touches.

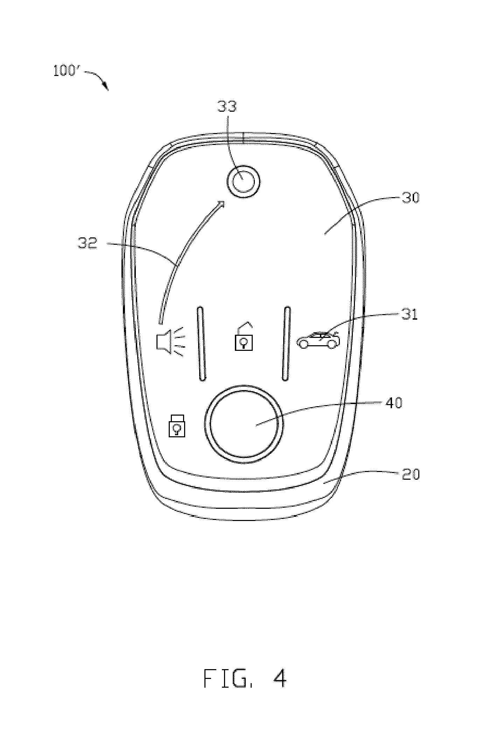

In another embodiment, referring to FIG. 4, a plan view of another remote key 100' is shown in operation. In the embodiment, the remote key 100' further includes an indicator icon 33 arranged on the touch panel 30. In use, user can touch one of the function icons 31 and slide it towards the indicator icon 33 to trigger the micro controller 70 to generate the remote control signal.

In the embodiment, the storage device 50 can further store coordinates of the indicator icon 33, and each predetermined touch includes a predetermined touch track starting from the coordinates of one of the function icons 31 and ending with the coordinates of the indicator icon 33.

In the embodiment, the micro controller 70 can determine whether the sensed touch includes a track starting from a start point located on the coordinates of one of the function icons 31 and ending with an end point located on the coordinates of indicator icon 33. If the sensed touch includes a track starting from a start point located on the coordinates of one of the function icons 31 and ending with an end point located on the coordinates of indicator icon 33, the micro controller 70 determines that the sensed touch matches one of the predetermined touches.

Referring to FIG. 2, the remote key 100 further includes a plurality of buttons 40 arranged on the main body 20. The buttons 40 can be pressed by a user and generate a pressing signal. The mapping list further defines a relationship between pressing signals generated by each of the buttons 40 and predetermined functions. The micro controller 70 can further receive the pressing signals, search the mapping list to determine a function corresponding to the pressing signal, and generate a remote control signal for controlling the vehicle to execute the function.

In the embodiment, the remote key 100 further includes a prompt unit 90 configured to indicate to a user the fact of a touch. In one embodiment, the prompt unit 90 is a vibrator configured to vibrate when one or more of the function icons 31 is touched. In another embodiment, the prompt unit 90 is a lighting control unit configured to highlight a touched icon 31.

In other embodiments, the remote key 100 can be provided with near-field communication capabilities and applications, such as e-wallet function, or personal identity certification.

The embodiments shown and described above are only examples. Even though numerous characteristics and advantages of the present technology have been set forth in the foregoing description, together with details of the structure and function of the present disclosure, the disclosure is illustrative only, and changes may be made in the detail, including in particular the matters of shape, size, and arrangement of parts within the principles of the present disclosure, up to and including the full extent established by the broad general meaning of the terms used in the claims.

## Claims

1. A remote key for control of a vehicle, the remote key comprising:
a main body;
a touch panel arranged on the main body, wherein a plurality of function icons are arranged on the touch panel, and each of the function icons is operable to control the vehicle to perform a function;
a storage device configured to store coordinates of the function icons and a mapping defining a relationship between predetermined touches and predetermined functions;
a touch sensing unit coupled to the touch panel, and configured to sense a touch applied to the touch panel;
a micro controller configured to search the mapping list to determine whether the sensed touch matches one of the predetermined touches; if the sensed touch matches one of the predetermined touches, the micro controller further configured to search the mapping list to determine a required function corresponding to the sensed touch, and generate a remote control signal for controlling the vehicle to execute the required function; and
a wireless communicating unit configured to transmit the remote control signal to a receiver of the vehicle, to control the vehicle to execute the required function.

2. The remote key as described in claim 1, wherein each predetermined touch comprises a predetermined touch track starting from the coordinates of one of the function icons.

3. The remote key as described in claim 2, wherein each predetermined touch track starts from the coordinates of one of the function icons, and extends in a predetermined direction.

4. The remote key as described in claim 2, wherein each predetermined touch track starts from the coordinates of one of the function icons, and follows a predetermined pattern.

5. The remote key as described in claim 2, wherein the micro controller configured to determine whether the sensed touch comprises a track starting from a start point located on the coordinates of one of the function icons; if the sensed touch comprises a track starting from a start point located on the coordinates of one of the function icons, the micro controller further configured to determine whether the track of the sensed touch matches a predetermined touch track starting from the start point; if the track of the sensed touch matches a predetermined touch track starting from the start point, the micro controller determine that the sensed touch matches one of the predetermined touches.

6. The remote key as described in claim 1, further comprising an indicator icon arranged on the touch panel, wherein the storage device further configured to store coordinates of the indicator icon, and each predetermined touch comprises a predetermined touch track starting from the coordinates of one of the function icons and ending with the coordinates of the indicator icon.

7. The remote key as described in claim 6, wherein the micro controller configured to determine whether the sensed touch comprises a track starting from a start point located on the coordinates of one of the function icons and ending with an end point located on the coordinates of indicator icon; if the sensed touch comprises a track starting from a start point located on the coordinates of one of the function icons and ending with an end point located on the coordinates of indicator icon, the micro controller determine that the sensed touch matches one of the predetermined touches.

8. The remote key as described in claim 1, wherein the touch panel is made of transparent materials, and the function icons are provided in the interior of the touch panel.

9. The remote key as described in claim 1, wherein the function icons are printed or laser etched on the touch panel.

10. The remote key as described in claim 1, further comprising a plurality of buttons arranged on the main body, the buttons configured to be pressed and generate a pressing signal, wherein the mapping list further defines a relationship between pressing signals generated by each of the buttons and predetermined functions; the micro controller further configured to receive the pressing signals, search the mapping list to determine a function corresponding to the pressing signal, and generate a remote control signal for controlling the vehicle to execute the function.

11. The remote key as described in claim 1, further comprising a prompt unit configured to indicate to a user when a touch is applied.

12. The remote key as described in claim 1, wherein the prompt unit is a vibrator configured to vibrate when one or more of the function icons is touched.

13. The remote key as described in claim 1, wherein the prompt unit is a lighting control unit configured to highlight a touched icon.
